# EUROPÄISCHE PATENTSCHRIFT

(11) **EP 3 629 006 B1**
(45) Veröffentlichungstag und Bekanntmachung des Hinweises auf die Patenterteilung: **20.10.2021**
(21) Anmeldenummer: 19198691.8
(22) Anmeldetag: 20.09.2019
(51) Int. Cl.: G01N 21/05, G01N 21/3577, G01N 21/359, G01N 21/85

(54) **ANORDNUNG ZUR SENSORISCHEN UNTERSUCHUNG EINER FLIESSFÄHIGEN PROBE**
ARRANGEMENT FOR THE SENSOR-BASED INSPECTION OF A FLOWABLE SAMPLE
DISPOSITIF D'ANALYSE SENSORIELLE D'UN ÉCHANTILLON COULANT

(30) Priorität: 26.09.2018 DE 102018216498
(43) Veröffentlichungstag der Anmeldung: 01.04.2020
(73) Patentinhaber: Deere & Company, Moline, IL 61265 (US)
(72) Erfinder: Schade, Peter, 68163 Mannheim (DE)
(74) Vertreter: Holst, Sönke

(56) Entgegenhaltungen:
- EP-A1- 2 846 161
- WO-A1-2012/062829
- DE-A1- 10 318 942
- DE-A1-102008 001 783
- US-A- 5 414 508
- Villanueva Yolanda ET AL: "Measuring absorption coefficient of scattering liquids using a tube inside an integrating sphere", Applied Optics, vol. 55, no. 11, 10 April 2016 (2016-04-10), page 3030, XP55807789, US ISSN: 0003-6935, DOI: 10.1364/AO.55.003030

## Beschreibung

Die Erfindung betrifft eine Anordnung zur sensorischen Untersuchung einer fließfähigen Probe, umfassend eine zur Aufnahme der Probe vorgesehene Messkammer mit Wänden, die für Licht eines Spektralbereichs durchlässig sind; eine Lichtquelle zur Beaufschlagung der Messkammer mit Licht des Spektralbereichs, und einen Sensor zur Erfassung von der Probe reflektierten und/oder transmittierten Lichts der Lichtquelle.

### Stand der Technik

Es gibt eine Reihe von Anwendungen in der Nahrungsmittel- oder Landwirtschaft, in denen Inhaltsstoffe einer fließfähigen Probe zu erfassen sind. Hierbei kann es sich beispielsweise um flüssige landwirtschaftliche Produkte wie Milch oder Wein handeln, bei denen als Inhaltsstoffe Fett- oder Alkoholgehalt zu erfassen sind, oder Nebenprodukte, wie Gülle, bei der als Inhaltsstoff u.a. der Stickstoffgehalt zu messen ist, oder um rieselfähige (körnige) Produkte, wie Korn, dessen Gehalt an Protein zu untersuchen ist. Als Technik zur Inhaltsstoffbestimmung hat sich bei derartigen, fließfähigen Proben insbesondere die Nahinfrarottechnik bewährt. Dazu wird die zu untersuchende Probe mit breitbandigem oder aus diskreten Wellenlängen bestehendem Licht (oder nacheinander mit Licht unterschiedlicher Wellenlängen) bestrahlt, dessen Wellenlänge sich im sichtbaren und/oder nahinfraroten Bereich befindet. Das von der Probe reflektierte und/oder transmittierte Licht wird wellenlängenspezifisch durch einen Detektor erfasst und die erhaltenen Spektren werden anhand von Kalibrierkurven ausgewertet, um letztlich den Gehalt der Probe am zu sensierenden Inhaltsstoff zu ermitteln. Der gemessene Gehalt kann dazu dienen, einen Arbeitsparameter zu steuern, wie im Fall von Gülle die Ausbringrate eines Verteilfahrzeugs, oder er wird zu Dokumentationszwecken abgespeichert.

Üblicherweise wird der zur Inhaltsstofferfassung der Probe dienende Sensor an einer Leitung positioniert, durch welche ein die Probe bildender bzw. enthaltender Materialstrom in einer Maschine gefördert wird, wie bei einem Verteilfahrzeug für Gülle an einer Leitung zwischen einem Tank und den Ausbringorganen (DE 103 18 942 A1), oder bei einem Mähdrescher an einem Befüllrohr des Korntanks (US 5 092 819 A). Es wurde auch vorgeschlagen, den zur Inhaltsstofferfassung der Probe dienenden Sensor einer Probenkammer benachbart anzubringen, in den die aus dem Hauptstrom des zu untersuchenden Materials entnommene Probe kontinuierlich oder diskontinuierlich eingefüllt wird, wozu im Fall von Gülle üblicherweise eine Pumpe dient (DE 20 2018 002 521 U1, WO 2005/083386 A1), oder den Sensor in einen Tank einzutauchen, der die Probe enthält (DE 10 2010 043 131 A1).

Die Veröffentlichung "Measuring absorption coefficient of scattering liquids using a tube inside an integrating sphere", von Villanueva et al., Applied Optics, Vol.55, No.11, April 10, 2016 beschreibt eine Anordnung zur Untersuchung einer fließfähigen Probe mit einer Lichtquelle, einem Sensor, und einer eine Messkammer umschließenden Hülle.

In der WO 2015/071706 A1 wird ein Analysator für Korn beschrieben, der eine Kammer umfasst, in die eine zu untersuchende Probe des Korns eingefüllt wird. Die Kammer wird durch eine Lichtquelle diffus beleuchtet und ein spektraler Sensor erfasst das von der Probe spektral gefilterte (d.h. reflektierte oder transmittierte) Licht. Die innere Oberfläche der Kammer ist reflektierend ausgeführt, um die Intensität des vom Sensor erfassten Lichts zu vergrößern.

Die US 5 414 508 A zeigt ein optisches Detektionssystem mit einer Flüssigkeitsleitung, die als Messkammer dient und von einer Seite mit Licht beaufschlagt wird, während auf der gegenüberliegenden Seite ein optischer Sensor angeordnet ist. Zwischen der Messkammer einerseits und der Lichtquelle und dem Sensor andererseits sind teildurchlässige Spiegel angeordnet.

### Problem

Bei der Sensierung der Inhaltsstoffe von besonders dunklen Proben, wie beispielsweise Gülle besteht das Problem, dass die Sensitivität von Reflexionsmessungen nicht so gut wie die von Transmissionsmessungen ist, jedoch Transmissionsmessungen aufgrund geringer und bei unterschiedlichen Proben verschiedener Transmissionen der zu untersuchenden Materialien schwerer durchzuführen sind. Man benötigt demnach stellbare Spalte für Transmissionsmessungen und die Spalte drohen zu verstopfen, wenn sie klein werden. Es sind somit recht lange Messzeiten erforderlich, um das Nutzsignal vom Rauschen zu trennen. Die in der WO 2015/071706 A1 dargestellte Anordnung erfordert ein manuelles Einführen der Probe in die Kammer und eignet sich somit nicht für eine Anbringung an einer Maschine mit automatischer Probenzufuhr.

Die der Erfindung zu Grunde liegende Aufgabe wird darin gesehen, eine gegenüber dem Stand der Technik verbesserte Anordnung zur sensorischen Untersuchung einer fließfähigen Probe bereitzustellen, die die erwähnten Nachteile nicht oder in einem verminderten Maß aufweist.

### Lösung

Die vorliegende Erfindung wird durch die Patentansprüche definiert.

Eine Anordnung zur sensorischen Untersuchung einer fließfähigen Probe umfasst eine zur Aufnahme der Probe vorgesehene Messkammer mit Wänden, die für Licht eines Spektralbereichs durchlässig sind; eine Lichtquelle zur Beaufschlagung der Messkammer mit Licht des Spektralbereichs, einen Sensor zur Erfassung von der Probe reflektierten und/oder transmittierten Lichts der Lichtquelle und eine die Messkammer umschließende Hülle mit einer im Spektralbereich reflektierenden, inneren Oberfläche.

Mit anderen Worten wird vorgeschlagen, eine mit der Probe befüllbare Messkammer mit einer innenseitig reflektierenden Hülle zu umgeben. Die Probe wird durch die im verwendeten Spektralbereich zumindest teildurchlässigen Wände der Messkammer mit dem Licht von einer Lichtquelle beleuchtet. Die Hülle wirkt als Ulbricht-Kugel und sorgt für eine diffuse Beleuchtung der Messkammer mit dem Licht von der Lichtquelle. In der Messkammer wechselwirkt das Licht mit der Probe, wobei die Wechselwirkung sowohl aus Lichttransmission als auch aus Lichtreflektion besteht. Durch die Wechselwirkung zwischen Probe und Licht stellt sich eine durch die Eigenschaften der Probe bestimmte spektrale Verteilung des Lichts in der Hülle ein. Der Sensor misst die spektrale Lichtverteilung in der Probenkammer. Auf diese Weise wird durch die Integrationswirkung der Hülle die Messzeit insbesondere bei dunklen Proben, wie Gülle, verkürzt bzw. die Messgenauigkeit verbessert, während die mit von der Hülle getrennten Wänden versehene Messkammer (anders als der Stand der Technik nach WO 2015/071706 A1) nicht nur eine manuelle Befüllung erlaubt, sondern auch eine maschinelle Befüllung der Anordnung mit der Probe ermöglicht. Die Signale des Sensors können dazu dienen, einen Arbeitsparameter einer (insbesondere landwirtschaftlichen) Maschine zu steuern, wie im Fall von Gülle die Ausbringrate eines Verteilfahrzeugs, oder sie werden zu Dokumentationszwecken abgespeichert.

Die Hülle ist vorzugsweise zumindest näherungsweise kugelförmig.

Die Lichtquelle kann eingerichtet sein, mehrere unterschiedliche (und insbesondere im sichtbaren und/oder nahinfraroten Bereich liegende) Wellenlängen des Spektralbereichs gleichzeitig oder nacheinander abzustrahlen und der Sensor eingerichtet sein, mehrere Wellenlängen gleichzeitig oder nacheinander spektral aufgelöst zu sensieren. Der Sensor stellt somit Spektren (d.h. Informationen zur Reflektivität und/oder Transmission der Probe bei unterschiedlichen Wellenlängen) bereit, die durch eine Auswertungseinrichtung in an sich bekannter Weise in Verbindung mit Kalibrierdaten zur Ermittlung eines oder mehrerer Inhaltsstoffe der Probe dienen können.

Ein Standard zur Referenzierung des Sensors ist wahlweise über die Messkammer schiebbar, wozu Antriebsmittel zur Bewegung des Standards zwischen einer aktiven Position, in welcher der Standard über die Messkammer geschoben ist, und einer inaktiven Position, in welcher der Standard von der Messkammer beabstandet ist, vorgesehen sind. Ein Standard könnte auch in die Messkammer geführt werden.

Vorzugsweise sind Mittel zum Fördern der Probe in die Messkammer und/oder zum Entleeren der Messkammer vorgesehen. Hierbei kann die Messkammer Bestandteil eines Leitungssystems sein, durch welches die Probe förderbar ist. Die Mittel zum Fördern der Probe in die Messkammer und zum Entleeren der Messkammer werden in dieser Ausführungsform durch Fördermittel zum Fördern eines die Probe enthaltenden Materialstroms durch das Leitungssystem gebildet. Bei einer anderen Ausführungsform können die Mittel zum Fördern der Probe in die Messkammer und zum Entleeren der Messkammer einen beweglichen Kolben umfassen. Zur Bewegung des Kolbens zwischen einer Position zum Entleeren der Messkammer und einer Ruheposition kann ein Antrieb dienen. An der Rückseite des Kolbens könnte der oben erwähnte Standard befestigt werden, so dass mit jedem Entleervorgang eine Referenzierung durchgeführt werden kann.

### Ausführungsbeispiele

In den Zeichnungen sind zwei nachfolgend näher beschriebene Ausführungsbeispiele der Erfindung dargestellt. Es zeigen:
Fig. 1 einen schematischen Schnitt durch eine erste Ausführungsform einer Anordnung zur sensorischen Untersuchung einer fließfähigen Probe, und
Fig. 2 einen schematischen Schnitt durch eine zweite Ausführungsform einer Anordnung zur sensorischen Untersuchung einer fließfähigen Probe.

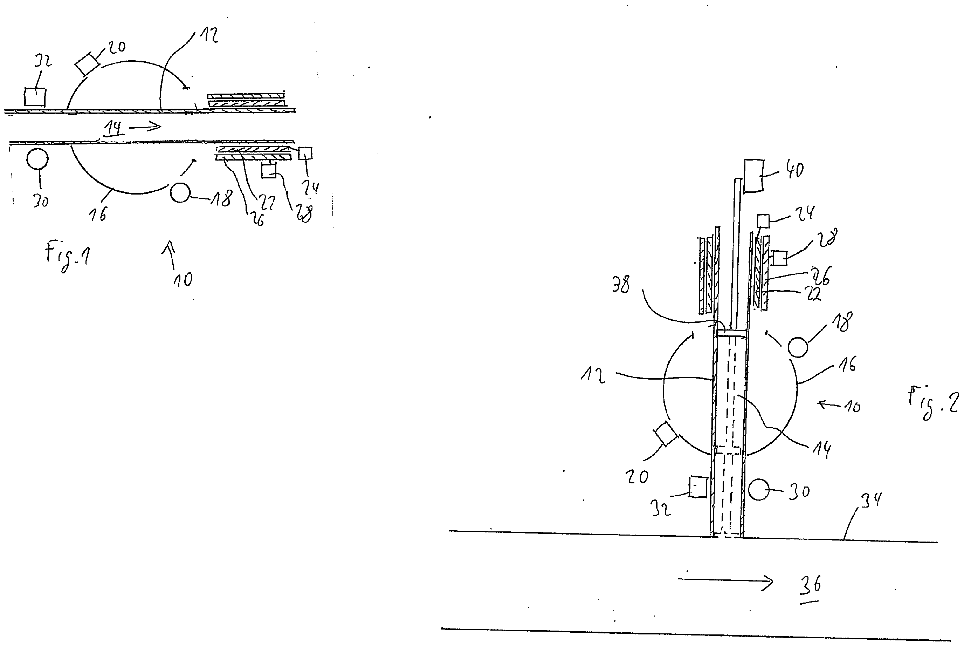

Die Figur 1 zeigt eine schematische Ansicht einer ersten Ausführungsform einer Anordnung 10 zur sensorischen Untersuchung einer fließfähigen Probe. Die Anordnung 10 umfasst eine Messkammer 14, die in radialer Richtung von Wänden 12 umschlossen wird. Der Querschnitt der Messkammer 14 kann kreisförmig oder rechteckig oder quadratisch sein. Die Messkammer 14 wird von einer kugelförmigen Hülle 16 umschlossen, symmetrisch zur Achse der Messkammer 14. Durch ein Loch in der Hülle 16 wird der Innenraum der Hülle 16 und somit die Messkammer 14 von einer Lichtquelle 18 mit Licht beaufschlagt. Ein Sensor 20 ist der Lichtquelle 18 diametral gegenüberliegend angeordnet und blickt durch ein weiteres Loch in der Hülle auf die Messkammer 14. Der Sensor 20 erhält demnach kein Licht direkt von der Lichtquelle 18. Im Extremfall könnte die Messkammer 14 auch zwei parallele Platten umfassen, die zwischen zwei Hälften der Hülle 16 angeordnet sind. Dann hätte man eine reine Transmissionsmessung.

Die Lichtquelle 18 stellt breitbandiges Licht (indem sie z.B. als Halogenlampe ausgeführt ist) oder Licht unterschiedlicher Wellenlängen gleichzeitig oder nacheinander bereit (indem sie eine oder mehrere Halbleiterelemente, z.B. Leuchtdioden oder Laser, für unterschiedliche Wellenlängen umfasst). Die Lichtquelle 18 kann mit einem speziellen Diffusor ausgestattet sein. Das ist z.B. eine Halbkugel, die nahe vor der Lichtquelle 18, zwischen Lichtquelle 18 und Messkammer 14, gehalten wird und die das Licht homogen in die Hülle 16 verteilt. Der Sensor 20 kann für unterschiedliche Wellenlängen gleichzeitig oder nacheinander die Intensitäten erfassen, d.h. er kann die Intensität des von einer in der Messkammer 14 enthaltenen Probe reflektierten und/oder transmittierten Lichts wellenlängenaufgelöst sensieren. Die Lichtquelle 18 und der Sensor 20 bilden demnach eine spektrometrische Anordnung, die insbesondere im Nahinfrarotbereich arbeitet. Eine in der Figur 1 nicht gezeigte Auswertungseinrichtung kann die Signale des Sensors 20 unter Verwendung von Kalibrierdaten auswerten, um den Anteil der Probe an beliebigen Inhaltsstoffen zu ermitteln.

Die Hülle 16 ist zumindest für den vom Sensor 20 verwendeten Spektralbereich innenseitig reflektierend ausgeführt. Hierzu kann sie mit einer geeigneten Beschichtung, z.B. aus Gold, ausgestattet sein, oder aus einem geeigneten Material bestehen. Durch die reflektierende und licht-integrierende Wirkung der Hülle 16 wird einerseits das Licht der Lichtquelle 18 diffus gemacht, was zu einer homogenen Beleuchtung der Probe in der Messkammer 14 führt und andererseits erreicht, dass Intensität des den Sensor 20 erreichenden, von der Probe in der Messkammer 14 spektral beeinflussten (reflektierten und/oder transmittierten) Lichts gegenüber einer Anordnung 10 ohne eine derartige Hülle 16 vergrößert wird, was auch die Sensitivität und Genauigkeit der Anordnung 10 verbessert. Durch eine optionale, der Lichtquelle 18 diametral gegenüber liegende Positionierung des Sensors 20 vermeidet man eine Überstrahlung des von der Probe in der Messkammer 14 spektral beeinflussten Lichts durch das direkte Licht der Lichtquelle 18. Hierzu wird auch auf die Ausführungen in der WO 2015/071706 A1 verwiesen. Es könnten auch mehrere Sensoren 20 und/oder Lichtquellen 18, die jeweils verschiedene Spektralbereiche verwenden, über die Hülle 16 verteilt werden.

Erfindungsgemäß ist zur Referenzierung des Spektrometers ein erster Standard 22 und bei Bedarf ein zweiter Standard 26 von außen über die Wände 12 der Messkammer 14 schiebbar, wozu separate Antriebe 24 und 28 vorgesehen sind. Der erste Standard 22 kann ein Weiss-Standard sein und der zweite Standard 28 ein Schwarz-Standard oder umgekehrt. Der Schwarz-Standard könnte ggf. auch entfallen, indem man die Lichtquelle 18 abschaltet.

Um die Transmission (Lichtdurchlässigkeit) der Probe bestimmen zu können, kann der Messkammer 14 in der Bewegungsrichtung der Probe 14, die durch den Pfeil in der Figur 1 dargestellt ist, eine zweite Lichtquelle 30 und ein zweiter Sensor 32 vor- oder nachgelagert werden. Der zweite Sensor 32 kann als reiner Intensitätssensor (Photodiode oder -transistor) ausgeführt sein. Mittels der zweiten Lichtquelle 30 und des zweiten Sensors 32 kann anhand der Durchlässigkeit der Probe für das Licht der Feststoffanteil der Probe bestimmt werden, z.B. wenn es sich dabei um Gülle handelt.

Wie in der Figur 1 durch den Pfeil dargestellt, durchströmt die Probe die Messkammer 14. Bei der Probe kann es sich um ein beliebiges, zu untersuchendes Medium handeln, das fließfähig ist. Nicht einschränkend kann es sich um eine Flüssigkeit, wie Gülle oder Milch, oder um ein körniges Medium wie Korn oder gehäckselte Pflanzen handeln. Die Messkammer 14 kann in einer (insbesondere landwirtschaftlichen) Maschine in eine Leitung eingefügt werden, in der das Medium, z.B. Erntegut oder Gülle, gefördert wird (s. US 5 092 819 A, DE 20 2018 002 521 U1, DE 103 18 942 A1 oder DE 10 2004 010 772 A1), oder sie wird in eine Abzweigleitung (Bypass) eingefügt, durch den das Material kontinuierlich (wie in WO 2005/083386 A1, DE 10 2008 001 783 A1 oder DE 10 2010 062 417 A1 beschrieben) oder in regelmäßigen Zeitabständen diskontinuierlich eingefüllt und wieder entnommen wird (s. EP 0 908 086 A1 oder EP 1 454 519 A1).

Die Figur 2 zeigt eine zweite Ausführungsform einer Anordnung 10 zur sensorischen Untersuchung einer fließfähigen Probe, bei der die Probe 14 durch einen Kolben 38 aus einem Hauptstrom 36 des Materials, das in einer Leitung 34 gefördert wird, in regelmäßigen Zeitabständen entnommen und nach der Messung wieder eingebracht wird. Der Kolben 38 ist durch einen Antrieb 40 zwischen einer Ruheposition, in der er in der Figur 2 durchgezogen gezeigt ist, und in der die Probe durch den Sog des Kolbens 38 und den Druck des Materials im Hauptstrom 36 in die Messkammer 14 gelangt ist, und einer Ausstoßposition bewegbar, in der der Kolben 38 sich in einer der gestrichelt gezeigten Positionen am unteren Ende der Messkammer 14 oder am Einlass der Leitung 34 befindet. Der Kolben 38 hat auch eine Reinigungswirkung für die Innenwände der Messkammer 14 und beseitigt eventuelle Verstopfungen der Messkammer, so dass nur einzelne oder keine Fehlmessungen auftreten. Die in der Figur 2 gezeigte Anordnung eignet sich zur Sensierung der oben erwähnten Materialien und insbesondere für Gülle, die in relativ dicken Leitungen 34 mit Durchmessern von 15 bis 20 cm gefördert wird, während die zur Nahinfrarotspektroskopie geeigneten Durchmesser der Messkammer 14 im Bereich von einigen cm liegen. Einer der Standards 22 oder 26 könnte, anders als in der Figur 2 gezeigt, an der vom zu untersuchendem Material beabstandeten Rückseite des Kolbens 38 befestigt sein und bei jeder Entleerung der Messkammer 14 in letztere eingeschoben werden, um eine Referenzierung des Sensors 20 zu ermöglichen.

Es wäre denkbar, bei der Anordnung nach Figur 2 zwischen dem Übergang zwischen der Messkammer 14 und der Leitung 34 noch ein Sieb oder eine Zerkleinerungseinrichtung für das zu untersuchende Material einzubringen, damit keine größeren Partikel in die Messkammer 14 gelangen können. Hierzu wird auf die Offenbarung der WO 2005/083386 A1 verwiesen. Zudem kann der Messkammer 14 ein Temperatursensor zur Erfassung der Temperatur der Probe in der Messkammer 14 zugeordnet werden.

Die Anordnung 10 der Figur 2 kann demnach besonders vorteilhaft an einer Maschine zum Ausbringen von Gülle an der in DE 103 18 942 A1 gezeigten Stelle im Leitungssystem zwischen einem Tank und der Ausbringeinrichtung eines Fahrzeugs zum Ausbringen von Gülle angebracht werden und die Signale des Sensors 20 zur Kontrolle der Ausbringrate dienen, oder sie wird an einem die Gülle enthaltenden Tank angebracht. Alternativ oder zusätzlich werden die Signale des Sensors 20 oder daraus abgeleitete Werte zu Dokumentationszwecken georeferenziert abgespeichert.

## Patentansprüche

1. Anordnung (10) zur sensorischen Untersuchung einer fließfähigen Probe, umfassend:
eine zur Aufnahme der Probe vorgesehene Messkammer (14) mit Wänden (12), die für Licht eines Spektralbereichs durchlässig sind;
eine Lichtquelle (18) zur Beaufschlagung der Messkammer (14) mit Licht des Spektralbereichs,
einen Sensor (20) zur Erfassung von der Probe reflektierten und/oder transmittierten Lichts der Lichtquelle (18),
eine die Messkammer (14) umschließende Hülle (16) mit einer im Spektralbereich reflektierenden, inneren Oberfläche,
**dadurch gekennzeichnet, dass** wenigstens ein Standard (22, 26) zur Referenzierung des Sensors (20) wahlweise von außen über die Wände der Messkammer (14) schiebbar ist, und dass Mittel (24, 28) zur Bewegung des Standards (22, 26) zwischen einer aktiven Position, in welcher der Standard (22, 26) über die Messkammer (14) geschoben ist, und einer inaktiven Position, in welcher der Standard (22, 26) von der Messkammer (14) beabstandet ist, vorgesehen sind,

2. Anordnung (10) nach Anspruch 1, wobei die Hülle (16) zumindest näherungsweise kugelförmig ist.

3. Anordnung (10) nach einem der Ansprüche 1 oder 2, wobei die Lichtquelle (18) eingerichtet ist; mehrere unterschiedliche Wellenlängen des Spektralbereichs gleichzeitig oder nacheinander abzustrahlen und der Sensor (20) eingerichtet ist, mehrere Wellenlängen gleichzeitig oder nacheinander spektral aufgelöst zu sensieren.

4. Anordnung (10) nach einem der Ansprüche 1 bis 3, mit Mitteln zum Fördern der Probe in die Messkammer (14) und/oder zum Entleeren der Messkammer (14),

5. Anordnung (10) nach Anspruch 4, wobei die Messkammer (14) Bestandteil eines Leitungssystems ist, durch welches die Probe förderbar ist und die Mittel zum Fördern der Probe in die Messkammer (14) und/oder zum Entleeren der Messkammer (14) durch Fördermittel zum Fördern eines die Probe enthaltenden Materialstroms durch das Leitungssystem gebildet werden.

6. Anordnung (10) nach Anspruch 4, wobei die Mittel zum Fördern der Probe in die Messkammer (14) und/oder zum Entleeren der Messkammer (14) einen beweglichen Kolben (38) umfassen.

7. Anordnung (10) nach Anspruch 6, mit einem Antrieb (40) zur Bewegung des Kolbens (38) zwischen einer Position zum Entleeren der Messkammer (14) und einer Ruheposition.

8. Landwirtschaftliche Maschine mit einer Anordnung nach einem der vorhergehenden Ansprüche und einem vom Sensor (20) gesteuerten Aktor.

## Claims

1. Arrangement (10) for the sensory examination of a free-flowing sample, comprising:
a measuring chamber (14), which is provided for accommodating the sample, having walls (12) which are transmissive to light of a spectral range;
a light source (18) for applying light of the spectral range to the measuring chamber (14),
a sensor (20) for detecting light of the light source (18) reflected and/or transmitted by the sample,
a casing (16), which encloses the measuring chamber (14), having an inner surface reflective in the spectral range, **characterized in that** at least one standard (22, 26) for referencing the sensor (20) is able to be optionally pushed over the walls of the measuring chamber (14) from the outside, and **in that** means (24, 28) for moving the standard (22, 26) between an active position, in which the standard (22, 26) is pushed over the measuring chamber (14), and an inactive position, in which the standard (22, 26) is spaced apart from the measuring chamber (14), are provided.

2. Arrangement (10) according to Claim 1, wherein the casing (16) is at least approximately spherical.

3. Arrangement (10) according to either one of Claims 1 and 2, wherein the light source (18) is configured to emit multiple different wavelengths of the spectral range simultaneously or successively and the sensor (20) is configured to sense multiple wavelengths simultaneously or successively in a spectrally-resolved manner.

4. Arrangement (10) according to one of Claims 1 to 3, having means for conveying the sample into the measuring chamber (14) and/or for emptying the measuring chamber (14) .

5. Arrangement (10) according to Claim 4, wherein the measuring chamber (14) is a component of a line system, through which the sample is able to be conveyed, and the means for conveying the sample into the measuring chamber (14) and/or for emptying the measuring chamber (14) are formed by conveyor means for conveying a material flow containing the sample through the line system.

6. Arrangement (10) according to Claim 4, wherein the means for conveying the sample into the measuring chamber (14) and/or for emptying the measuring chamber (14) comprise a movable piston (38).

7. Arrangement (10) according to Claim 6, having a drive (40) for moving the piston (38) between a position for emptying the measuring chamber (14) and an idle position.

8. Agricultural machine having an arrangement according to one of the preceding claims and an actuator controlled by the sensor (20).

## Revendications

1. Agencement (10) destiné à l'analyse sensorielle d'un échantillon coulant, comprenant :
une chambre de mesure (14) prévue pour recevoir l'échantillon et dotée de parois (12) laissant passer la lumière d'un domaine spectral ;
une source de lumière (18) pour appliquer la lumière du domaine spectral à la chambre de mesure (14),
un capteur (20) pour détecter la lumière de la source de lumière (18) réfléchie et/ou transmise par l'échantillon,
une enveloppe (16) entourant la chambre de mesure (14) et ayant une surface intérieure réfléchissante dans le domaine spectral,
**caractérisé en ce qu'**au moins un étalon (22, 26) peut en option être placé depuis l'extérieur sur les parois de la chambre de mesure (14) pour référencer le capteur (20), et **en ce que** des moyens (24, 28) sont prévus pour déplacer l'étalon (22, 26) entre une position active dans laquelle l'étalon (22, 26) est placé sur la chambre de mesure (14), et une position inactive dans laquelle l'étalon (22, 26) est écarté de la chambre de mesure (14) .

2. Agencement (10) selon la revendication 1, dans lequel l'enveloppe (16) est au moins approximativement sphérique.

3. Agencement (10) selon l'une quelconque des revendications 1 et 2, dans lequel la source de lumière (18) est aménagée pour diffuser plusieurs longueurs d'onde différentes du domaine spectral en même temps ou successivement, et le capteur (20) est aménagé pour détecter de manière spectralement résolue plusieurs longueurs d'onde en même temps ou successivement.

4. Agencement (10) selon l'une quelconque des revendications 1 à 3, comprenant des moyens pour transporter l'échantillon dans la chambre de mesure (14) et/ou pour vider la chambre de mesure (14).

5. Agencement (10) selon la revendication 4, dans lequel la chambre de mesure (14) fait partie d'un système de conduites à travers lequel l'échantillon peut être transporté, et les moyens pour transporter l'échantillon dans la chambre de mesure (14) et/ou pour vider la chambre de mesure (14) sont formés par des moyens de transport pour transporter un flux de matière contenant l'échantillon à travers le système de conduites.

6. Agencement (10) selon la revendication 4, dans lequel les moyens pour transporter l'échantillon dans la chambre de mesure (14) et/ou pour vider la chambre de mesure (14) comprennent un piston mobile (38).

7. Agencement (10) selon la revendication 6, comprenant un dispositif d'entraînement (40) pour déplacer le piston (38) entre une position pour vider la chambre de mesure (14) et une position de repos.

8. Machine agricole comprenant un agencement selon l'une quelconque des revendications précédentes et un actionneur commandé par le capteur (20).
